# EUROPÄISCHE PATENTSCHRIFT

(11) **EP 2 515 639 B1**
(45) Veröffentlichungstag und Bekanntmachung des Hinweises auf die Patenterteilung: **03.07.2019**
(21) Anmeldenummer: 10805773.8
(22) Anmeldetag: 19.12.2010
(51) Int. Cl.: A01L 15/00

(54) **VORRICHTUNG ZUM REINIGEN DER HUFE UND KLAUEN VON NUTZTIEREN**
DEVICE FOR CLEANING THE HOOVES AND CLAWS OF FARM ANIMALS
DISPOSITIF POUR NETTOYER LES SABOTS DES ANIMAUX

(30) Priorität: 23.12.2009 DE 102009060953
(43) Veröffentlichungstag der Anmeldung: 31.10.2012
(73) Patentinhaber: Keller, Michael, 67659 Kaiserslautern (DE)
(72) Erfinder: Keller, Michael, 67659 Kaiserslautern (DE)
(74) Vertreter: Klein, Friedrich Jürgen
(86) Internationale Anmeldenummer: PCT/EP2010/007739
(87) Internationale Veröffentlichungsnummer: WO 2011/079919

(56) Entgegenhaltungen:
- EP-A2- 1 905 383
- WO-A2-2007/070655
- DE-U1-202009 005 742

## Beschreibung

Die Erfindung betrifft ein Verfahren zum Säubern einer zur Reinigung der Hufe oder Klauen von Nutztieren dienenden Vorrichtung gemäß dem Oberbegriff des Anspruchs 1 und eine Vorrichtung zum Reinigen der Hufe und Klauen von Nutztieren nach dem Oberbegriff des Anspruchs 6.

Eine solche Reinigungsvorrichtung ist aus der DE 20 2009 005 742 U1 bekannt. Sie besteht aus einer flachen Wanne und zwei an den Längsseiten der Wanne angeordneten geländerartigen Leitelementen. Diese bilden gemeinsam mit der Wanne einen Durchgangsraum für die Tiere. Auf der Wanne liegt ein Gitterrost, auf dem die Tiere beim Durchqueren der Reinigungsvorrichtung entlanglaufen. Im Bereich des Gitterrostes sind Düsen angebracht, durch die Wasser an die Hufe bzw. Klauen der Tiere gesprüht wird. Der dabei von den Hufen bzw. Klauen abgespülte Schmutz und eventuell anfallende Kot gelangt mit dem zurückfallenden und abtropfenden Wasser in die Wanne, aus der am Ende der Reinigungsstrecke das verschmutzte Wasser über den Spülweg von der Anlage ablaufen soll. Wie dies im Einzelnen geschehen soll, ist in der DE-U1 nicht erläutert. Es ist offen gelassen, wie der insgesamt anfallende Schmutz und Kot aus der Wanne entfernt wird, sodass davon auszugehen ist, dass die Wanne in bestimmten zeitlichen Abständen oder bei Erreichen eines nicht mehr vertretbaren Verschmutzungsgrades durch eine Bedienungsperson mit Hilfe eines Wasserschlauches gereinigt werden muss. Dies wird insbesondere dann erforderlich sein, wenn sich faserige Schmutzbestandteile, wie z. B. Gras- oder Strohhalme im Gitterrost verfangen haben.

Der Erfindung liegt daher die Aufgabe zugrunde, eine Vorrichtung zum Reinigen der Hufe oder Klauen von Nutztieren so zu gestalten, dass auch große Schmutz- und Kotmengen sowie faserige Schmutzbestandteile, die sich im Gitterrost verfangen haben, ohne Zuhilfenahme des Bedienungspersonals entfernbar sind.

Diese Aufgabe wird dadurch gelöst, dass die Wanne von Wandelementen gebildet ist, wobei zwei parallel zu den Leitelementen verlaufende Wandelemente mit diesen einstückig ausgebildet sein können und dass die Wanne wenigstens eine Auslassöffnung aufweist, die durch ein zwischen einer Schließ- und einer Offenstellung bewegbares Absperrelement verschließbar ist, dass der obere Rand der Wandelemente höher ist als die Oberseite des Gitterrostes und dass der Flüssigkeitsstand in der Wanne vorzugsweise schrittweise über den Gitterrost anhebbar und die in der Wanne befindliche Flüssigkeit durch Verbringen des bewegbaren Absperrelementes in die Offenstellung ablassbar ist.

Beim Befüllen der Wanne wird zunächst so viel Reinigungsflüssigkeit, beispielsweise Wasser, in die Wanne gegeben, dass sich der Flüssigkeitsstand um einen Betrag oberhalb der Oberseite des Rostes befindet. Dadurch dass der Flüssigkeitsspiegel oberhalb der Oberfläche des Rostes liegt, werden faserige Schmutzbestandteile, die sich am Gitterrost verfangen, von den Gitterstegen gelöst, worauf sie dann im Wasser frei schwimmen. Damit die Schmutzbestandteile dabei in Richtung des Pfeiles A zum auslaufseitigen Ende des Durchgangsraumes treiben, ist es vorteilhaft, wenn der Flüssigkeitsspiegel in der Wanne ein Gefälle zum Ende des Durchgangsraumes aufweist. Dieses Gefälle kann ohne großen Aufwand dadurch erreicht werden, dass die Höhe der quer zu den Leitelementen verlaufenden Wandteile unterschiedlich ist.

Obwohl auf diese Weise schon ein wesentlicher Anteil der Schmutzteile mit dem ständig abfließenden Wasser, -das gefiltert wieder in die Wanne zurück geführt wird- die Wanne verlässt, ist es dennoch erforderlich, nach jeweils einer bestimmten Anzahl von gereinigten bzw. behandelten Tieren die Wanne einer "Grundreinigung" zu unterziehen.

Hierzu wird durch Zufuhr weiterer Reinigungsflüssigkeit der Flüssigkeitsstand um einen bestimmten Betrag erhöht.

Wenn das Absperrelement aus der Schließstellung in die Offenstellung bewegt und somit die Auslassöffnung freigegeben wird, fließt das in der Wanne enthaltene Wasser mitsamt dem angesammelten Schmutz aus der Wanne heraus. Je größer hierbei die Auslassöffnung und je schneller der Vorgang des Öffnens ist, desto schneller wird das verschmutzte Wasser abfließen. Bei einer entsprechend großen Auslassöffnung und einem sehr schnellen Öffnen fließt das verschmutzte Wasser sturzbachähnlich aus der Wanne heraus und reißt dabei sowohl am Wannenboden anhaftende als auch eventuell noch am Gitterrost hängende Schmutzpartikel mit, wodurch die Wanne ohne zusätzliche Unterstützung durch Bedienungspersonal optimal gereinigt wird.

Eine besonders einfache Ausgestaltung der Erfindung besteht darin, dass das Absperrelement von wenigstens einem quer zu den Leitelementen verlaufenden und somit stirnseitigen Wandelement gebildet ist, wobei dieses Wandelement teilweise -vorzugsweise aber vollständig- als eine um eine horizontale Achse schwenkbare Klappe gestaltet ist. Wenn ein solches Wandelement vollständig als Klappe ausgebildet ist, entspricht beim Verschwenken dieser Klappe in die Öffnungsstellung die zuvor von ihr versperrte Querschnittsfläche des Durchgangsraumes der Auslassöffnung der Wanne.

Gemäß einer vorteilhaften Weiterbildung liegt die Schwenkachse der Klappe im Bereich ihrer oberen Schmalseite. Auf diese Weise wird erreicht, dass sich an den die Schwenkachse bildenden Gelenken der Klappe beim Ablassen des Schmutzwassers keine Schmutz-Rückstände ansammeln können und die Klappe somit praktisch wartungsfrei ist.

In Weiterbildung der beschriebenen Einrichtung kann es beispielsweise zur Einsparung von Desinfektionsmittel- zweckmäßig sein, den Desinfektionsbereich in eine Mehrzahl von Segmenten zu unterteilen und jedem der Segmente oder bestimmten Gruppen von Segmenten jeweils eine oder mehrere ansteuerbare Düsen zuzuordnen, um hierdurch ein gezieltes Ansteuern von einzelnen oder von bestimmten Gruppen von Segmenten zu ermöglichen und damit ein gezieltes Vernebeln des Desinfektionsmittels gewährleisten.

In einer weiteren Ausgestaltung der Erfindung kann es vorteilhaft sein, die vorstehend beschriebene Weiterbildung unter räumlicher Trennung der Wasch- und Desinfektionsbereiche ein vorzugsweise optisches Sensorsystem eine weitere Auswertungseinheit vorzusehen, und diese mit einer Düsensteuerung zu verbinden, sodass beim Durchgang der Tiere gezielt nur diejenigen Desinfektionsdüsen aktiviert werden, die mindestens eine oder eine bestimmte Anzahl von Klauen erreichen können.

Weitere Einzelheiten und Vorteile der Erfindung ergeben sich aus der nachfolgenden Beschreibung eines in der Zeichnung dargestellten Ausführungsbeispieles der Erfindung.

**Es zeigt:**
**Fig. 1** **:**
   eine schematisierte Ansicht der vorderen Stirnseite der Vorrichtung,
**Fig. 2****:**
   eine schematisierte, teilweise geschnittene Draufsicht auf die Vorrichtung,
**Fig. 3****:**
   eine vergrößerte Ansicht der ausgangsseitigen Stirnseite der Vorrichtung mit einer schwenkbaren Klappe.
**Fig. 4****:**
   eine Seitenansicht im Bereich der ausgangsseitigen Stirnseite
**Fig. 5****:**
   eine Draufsicht auf einen Verriegelungshebel und
**Fig. 6****:**
   eine Ansicht des Verriegelungshebels

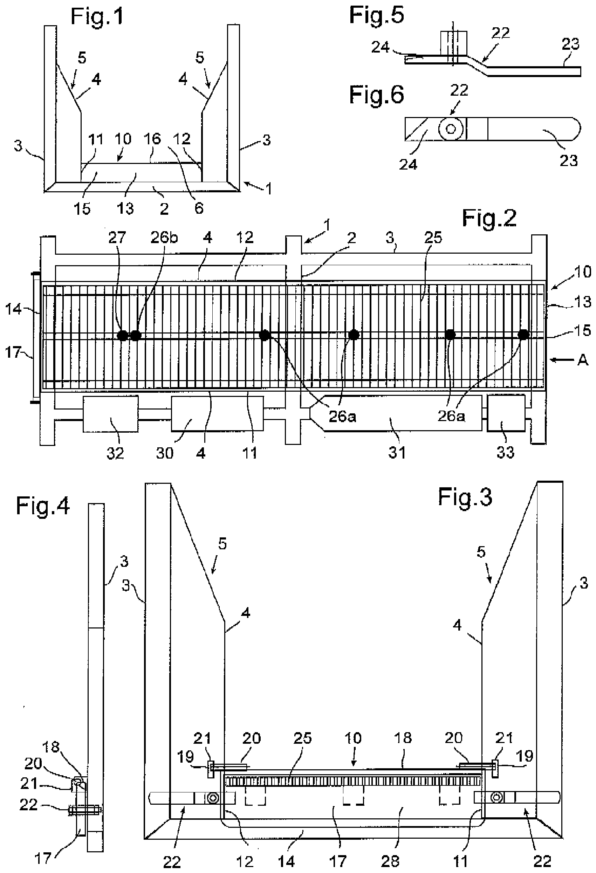

Die in den Figuren 1 und 2 schematisch dargestellte Vorrichtung zum Reinigen der Hufe und Klauen von Nutztieren weist einen Tragrahmen 1 auf, der aus einem Bodenteil 2 und zwei mit diesem fest verbundenen Seitenteilen 3 besteht. Die Seitenteile 3 sind durch großflächige Blechplatten 4 verkleidet, wodurch zwei gegenseitig beabstandete, allseits geschlossene, glattflächige Leitelemente 5 gebildet sind. Die beiden Leitelemente 5 bilden zwischen sich einen Durchgangsraum 6 für die Tiere, wobei die Durchlaufrichtung der Tiere in Fig. 2 mit einem Pfeil "A" gekennzeichnet ist.

Im Bereich des Durchgangsraumes 6 ist auf dem Bodenteil 2 eine Wanne 10 angeordnet. Sie weist vier Wandteile 11, 12, 13 und 14 auf, von denen die Wandteile 11, 12 parallel und die Wandteile 13, 14 quer zur Durchlaufrichtung A bzw. zu den Leitelementen 5 gerichtet sind. Die parallel zur Durchlaufrichtung A verlaufenden Wandteile 11, 12 werden hierbei von den inneren Blechplatten 4 der Leitelemente 5 gebildet. Von den quer zur Durchlaufrichtung A verlaufenden Wandteilen 13, 14 ist das in Durchlaufrichtung A vordere Wandteil 13 als feststehende, vertikal verlaufende Platte 15 ausgebildet (Fig. 1 und 2), deren obere Schmalseite mit 16 bezeichnet ist. Dagegen ist das in Durchlaufrichtung A hintere Wandteil 14 als Klappe 17 ausgebildet (Fig. 2 bis 4), die um eine im Bereich ihrer oberen Schmalseite 18 gelegene Achse 19 schwenkbar ist. Zu diesem Zweck sind zwei an der Klappe 17 befestigte Bolzen 20 in zwei am Tragrahmen 1 befestigten Ansätzen 21 drehbar aufgenommen. In diesem Zusammenhang sei angemerkt, dass in Fig. 2 zur deutlicheren Darstellung des Tragrahmens 1 und der Wanne 10 der Schnittverlauf so gelegt wurde, dass der oberhalb der Wanne 10 liegende Teil der Blechplatten 4, welche die Seitenteile 3 des Tragrahmens 1 verdecken und die Leitelemente 5 bilden, weggeschnitten ist.

Der Klappe 17 sind zwei von Hand betätigbare Hebel 22 zugeordnet, mit deren Hilfe die Klappe 17 in der in der Zeichnung dargestellten vertikalen Schließstellung verriegelbar ist. Die Hebel 22 sind zweiarmig ausgebildet, wobei der eine Arm 23 abgekröpft ist und als Handgriff dient, während der andere, teilweise abgeschrägte Arm 24 mit der Klappe 17 klemmend in Eingriff bringbar ist. An der Innenseite der Klappe 17 ist eine nicht dargestellte Dichtung angeordnet, durch die gewährleistet ist, dass die Wanne 10 bei in Schließstellung befindlicher Klappe 17 auslaufsicher abgedichtet ist.

Im Bereich der Wanne 10 ist mit Abstand zum Wannenboden ein horizontal verlaufender Gitterrost 25 fest angeordnet, der gegenüber dem Bodenteil 2 des Tragrahmens 1 so tragfähig abgestützt ist, dass er das Gewicht der über ihn hinweggehenden Tiere aufzunehmen vermag. Die Oberseite des Gitterrostes 25 verläuft mit Abstand unterhalb der oberen Schmalseiten 16, 18 der Platte 15 bzw. der Klappe 17.

Innerhalb des Gitterrostes 25 sind mehrere Düsen 26a für das Versprühen von Wasser in Durchlaufrichtung A und eine oder mehrere Düsen 26b für das Versprühen von Wasser entgegen der Durchlaufrichtung A der Tiere angeordnet. Ferner sind eine oder mehrere Düsen 27 für das Versprühen eines flüssigen Pflegemittels vorgesehen. Hierbei kann ein erster Teil 27a der Düsen 27 in der Richtung des Pfeils A und ein zweiter Teil 27b der Düsen 27 Pflegemittel entgegen der Richtung des Pfeils A versprühen.

Die Vorrichtung enthält ferner eine Wasserpumpe 30, einen dieser zugeordneten Filter 31 und eine Pflegemittelpumpe 32. Eine elektronische Steuerung 33 dient zum steuerungsmäßigen Betrieb der verschiedenen Teile der Vorrichtung, d.h. der Pumpen 30 und 32 sowie der nicht dargestellten Ventile für die Zufuhr des Wassers und des Pflegemittels.

Beim Betrieb der Vorrichtung befindet sich in der Wanne 10 eine bestimmte Wassermenge, die so bemessen ist, dass der Wasserspiegel um einen bestimmten Betrag oberhalb des Gitterrostes 25 liegt. Die Pumpe 30 saugt aus einem Reservoir Wasser an, leitet dieses durch den Filter 31 und pumpt es anschließend zu den Düsen 26a und 26b. Da der Wasserstand höher als die Höhe der Klappe 17 ist, fließt ständig Wasser in das Reservoir

Die an den Hufen bzw. Klauen zu säubernden bzw. zu behandelnden Tiere werden in Durchlaufrichtung A durch den Durchgangsraum 6 der Vorrichtung hindurchgeleitet, wobei sie mit ihren Hufen bzw. Klauen auf dem Gitterrost 25 entlang laufen und durch die Leitelemente 5 entsprechend geführt werden. Dabei werden die Hufe bzw. Klauen der Tiere zunächst von den Düsen 26a und 26b in unterschiedlichen Richtungen mit fächerartigen Wasserstrahlen von unten, von hinten und aufgrund der Reflektion der Wasserstrahlen an den Blechplatten 4 auch von den Seiten her besprüht und dadurch von außen sowie auch im Klauenspalt gereinigt. Der aus der Düse 26b entgegen der Durchlaufrichtung A austretende Wasserstrahl vermag aufgrund der zu den anderen Wasserstrahlen entgegengesetzten Wirkrichtung zum einen eventuell noch an den Hufen bzw. Klauen festsitzenden Schmutz abzuspülen und wirkt zum anderen für den aus der benachbarten Düse 26a in Durchlaufrichtung A austretenden Wasserstrahl wie eine Barriere, so dass kein Wasser aus der Vorrichtung herausspritzt.

Gegen Ende des Durchlaufs werden die Hufe bzw. Klauen der Tiere mit Hilfe einer oder mehreren Düsen 27 mit einem desinfizierenden Pflegemittel besprüht.

Der bei dem Reinigungsvorgang von den Hufen bzw. Klauen entfernte Schmutz und der beim Durchgang der Tiere eventuell ausgeschiedene Kot fällt mit dem zurückfallenden und abtropfendem Wasser auf und durch den Gitterrost 25 und sammelt sich in der Wanne 10. Die schwereren Schmutz- und Kotbestandteile werden hierbei absinken und sich auf dem Wannenboden absetzen. Die im Wasser schwebenden leichteren Schmutz- und Kotbestandteile werden von der Wasserpumpe 30 mit angesaugt und im Filter 31 abgeschieden, so dass nur sauberes Wasser zu den Düsen 26a und 26b gelangt.

Dieses Verfahren kann so lange fortgeführt werden, bis die in der Wanne 10 angesammelte Schmutz- und Kotmenge so weit angewachsen ist, dass sie von der Wasserpumpe 30 mit angesaugt wird. Da in diesem Fall der Filter 31 und die Pumpe 30 sehr schnell verstopfen würden, wird die Wanne 10 rechtzeitig, d. h. entweder nach einer festzulegenden Betriebsdauer oder nach einer bestimmten Anzahl von behandelten Tieren gereinigt.

Bei der Reinigung ist aber nicht nur die auf dem Wannenboden angesammelte Schmutz- und Kotschicht zu entfernen, vielmehr müssen auch die am Gitterrost 25 noch hängen gebliebenen faserigen Schmutzbestandteile, die seither nicht zusammen mit der Reinigungsflüssigkeit stetig abgeführt wurden, entfernt werden. Zu diesem Zweck wird zusätzliches Wasser in die Wanne 10 eingelassen, bis der Wasserspiegel um einen größeren Betrag oberhalb der Oberseite des Gitterrostes 25 steht. Durch diese Maßnahme werden auch die restlichen faserigen Schmutzbestandteile von den Gitterstäben bzw. -Stegen gelöst und schwimmen dann ebenfalls frei im Wasser. Das Lösen der faserigen Schmutzbestandteile kann durch Weiterlaufen der Wasserpumpe 30 unterstützt werden, da die jetzt bei dem erhöhten Wasserstand von Wasser bedeckten Düsen 26a und 26b nicht mehr Wasserstrahlen in die Luft ausstoßen, sondern das sie umgebende Wasser verwirbeln, wodurch ein zusätzlicher Löseeffekt entsteht.

Durch Verschwenken der Hebel 22 aus ihrer in der Zeichnung dargestellten Verriegelungsstellung in eine Freigabestellung schwenkt die Klappe 17 aus ihrer vertikalen Schließstellung in eine Offenstellung hoch. Auf diese Weise wird eine Auslassöffnung 28 der Wanne 10 freigegeben, die von der zuvor von der Klappe 17 verdeckten Querschnittsfläche zwischen den Wandteilen 11 und 12 der Wanne 10 gebildet ist. Da diese Auslassöffnung 28 in Figur 3 durch die Klappe 17 verdeckt ist, wurde der Bezugsstrich strichpunktiert dargestellt.

Durch das Hochschwenken der Klappe 17 bzw. das Öffnen der Auslassöffnung 28 kann jetzt das in der Wanne 10 befindliche Wasser mitsamt dem auf dem Wannenboden angesammelten Schmutz und Kot mit großer Fließgeschwindigkeit, d.h. geradezu wie ein Sturzbach aus der Wanne 10 ausströmen, wobei sowohl am Wannenboden anhaftende, als auch eventuell noch am Gitterrost 25 hängende Schmutzpartikel mitgerissen werden. Auf diese Weise wird die Wanne 10 ohne Mithilfe der Bedienungsperson schnell und gründlich gereinigt. Dabei ist es vorteilhaft wenn der Boden der Wanne insbesondere im Bereich der Auslassöffnung 28 ebenflächig und glatt ausgebildet ist, sodass sich in diesem Bereich keine Rückstände am Boden der Wanne ansammeln können.

Sobald die Wanne vollständig entleert ist, verschwenkt die Bedienungsperson die Klappe 17 wieder in die Schließstellung und dreht die Hebel 22 zurück in ihre Verriegelungsstellung, so dass die Wanne 10 wieder mit frischem Wasser so weit gefüllt werden kann bis der Flüssigkeitsspiegel wieder um den erstgenannten Betrag oberhalb der Oberfläche des Gitterostes steht und die die Vorrichtung erneut einsatzbereit ist.

Der gesamte Vorgang kann auch in so weit vollständig automatisiert werden, als die Dauer bis zur "Grundreinigung" entweder durch ein Zeitglied oder durch eine die Anzahl der die Vorrichtung durchlaufenden Tiere gezählt und nach Ereichen einer bestimmten Zeitvorgabe oder eines Grenzwertes der Anzahl der behandelten Tiere bestimmt wird, und die Klappe 17 über entsprechende Stellmotore geöffnet oder geschlossen wird. Dabei ist es selbstverständlich auch möglich, während des vorzugsweise zweistufigen Befüllens der Wanne den jeweiligen Stand des Flüssigkeitsspiegels in der Wanne beispielsweise durch Schwimmer abzugreifen und die Pumpe in Abhängigkeit vom dem jeweiligen Füllstand in der Wanne zu steuern.

## Patentansprüche

1. Verfahren zum Säubern einer zur Reinigung der Hufe oder Klauen von Nutztieren dienenden Vorrichtung, aufweisend einen von Leitelementen (5) gebildeten Durchgangsraum (6) für die Tiere und eine im Bereich des Durchgangsraumes (6) vorgesehenen Wanne (10), die von Wandelementen (11, 12, 13, 14) gebildet ist, wobei zwei parallel zu den Leitelementen (5) verlaufende Wandelemente (11, 12) mit diesen einstückig ausgebildet sein können, einem mit Abstand zum Wannenboden angeordneten, im wesentlich horizontal verlaufenden Gitterrost (25) und wenigstens eine Düse (26) zum Besprühen der Hufe oder Klauen mit einer Reinigungsflüssigkeit,
**dadurch gekennzeichnet,**
**dass** die Wanne (10) mittels eines zwischen einer Schließ-und einer Offenstellung bewegbaren Absperrelements (14 bzw. 17) verschlossen wird, der Flüssigkeitsstand in der Wanne (10) vorzugsweise schrittweise über den Gitterrost (25) angehoben wird, wobei der obere Rand der Wandelemente (11, 12, 13, 14) höher ist als die Oberseite des Gitterrosts (25), und die in der Wanne (10) befindliche Flüssigkeit durch Verbringen des bewegbaren Absperrelements (14 bzw. 17) In die Offenstellung abgelassen wird.

2. Verfahren nach Anspruch 1, **dadurch gekennzeichnet, dass** die Klappe (17) mittels wenigstens eines zweiarmigen Hebels (22) in der Schließstellung verriegelt wird, dessen einer Arm (23) als Handgriff dient und dessen anderer Arm (24) mit der Klappe (17) in Eingriff gebracht wird.

3. Verfahren nach einem der vorhergehenden Ansprüche, **dadurch gekennzeichnet, dass** die Tiere mit einem ersten Teil (26a) der Düsen (26) der Sprüheinrichtung für die Reinigungsflüssigkeit in Durchlaufrichtung der Tiere besprüht werden, und die Tiere mit einem zweiten Teil (26b) der Düsen (26) der Sprüheinrichtung für die Reinigungsflüssigkeit entgegen der Durchlaufrichtung der Tiere besprüht werden.

4. Verfahren nach einem der vorhergehenden Ansprüche, **dadurch gekennzeichnet, dass** die Tiere mit einem ersten Teil (27a) der Düsen (27) der Sprüheinrichtung für Pflegemittel in Durchlaufrichtung der Tiere besprüht werden, und die Tiere mit einem zweiten Teil (27b) der Düsen (27) der Sprüheinrichtung für Pflegemittel entgegen der Durchlaufrichtung der Tiere besprüht werden.

5. Vorrichtung zum Reinigen der Hufe oder Klauen von Nutztieren, bestehend aus einem von Leitelementen (5) gebildeten Durchgangsraum (6) für die Tiere und einer im Bereich des Durchgangsraums (6) vorgesehenen Wanne (10), die von Wandelementen (11, 12, 13, 14) gebildet ist, wobei zwei parallel zu den Leitelementen (5) verlaufende Wandelemente (11, 12) mit diesen einstückig ausgebildet sein können, einem mit Abstand zum Wannenboden angeordneten, im wesentlichen horizontal verlaufenden Gitterrost (25) und wenigstens einer Düse (26) zum Besprühen der Hufe oder Klauen mit einer Reinigungsflüssigkeit, **dadurch gekennzeichnet, dass** die Wanne (10) wenigsetens eine Auslassöffnung (28) aufweist, die durch ein zwischen einer Schließ- und einer Offenstellung bewegbares Absperrelement (14 bzw. 17) verschließbar ist, dass der obere Rand der Wandelemente (11, 12, 13, 14) höher ist als die Oberseite des Gitterrosts (25) und dass der Flüssigkeitsstand in der Wanne (10) vorzugsweise schrittweise über den Gitterrost (25) anhebbar und die in der Wanne (10) befindliche Flüssigkeit durch Verbringen des bewegbaren Absperrelements (14 bzw. 17) in die Offenstellung ablassbar ist.

6. Vorrichtung nach Anspruch 5, **dadurch gekennzeichnet, dass** das Absperrelement von wenigstens einem der quer zu den Leitelementen (5) verlaufenden Wandelementen (14) gebildet ist, wobei dieses teilweise oder vollständig als eine um eine horizontale Achse (19) schwenkbare Klappe (17) gestaltet ist.

7. Vorrichtung nach Anspruch 6, **dadurch gekennzeichnet, dass** die Schwenkachse (19) der Klappe (17) im Bereich ihrer oberen Schmalseite (18) angeordnet ist.

8. Vorrichtung nach Anspruch 6 oder 7, **dadurch gekennzeichnet, dass** die Klappe (17) mittels wenigstens eines zweiarmigen Hebels (22) in der Schließstellung verriegelbar ist, dessen Arm (23) als Handgriff dient, und dessen anderer Arm (24) mit der Klappe (17) in Eingriff bringbar ist.

9. Vorrichtung nach einem der vorhergehenden Ansprüche 5 bis 8, **dadurch gekennzeichnet, dass** die Höhe der beiden Wandelemente (13, 14) unterschiedlich ist, wobei die Höhe des im Eingangsbereich des Durchgangsraumes (6) angeordneten Wandelements (13) größer als die Höhe des am Ausgang des Durchgangsraumes (6) angeordneten Wandelements (14) ist.

10. Vorrichtung nach einem der vorhergehenden Ansprüche 5 bis 9, **dadurch gekennzeichnet, dass** ein erster Teil (26a) der Düsen (26) der Sprührichtung für die Reinigungsflüssigkeit in Durchlaufrichtung der Tiere gerichtet ist, und ein zweiter Teil (26b) der Düsen (26) der Sprührichtung für die Reinigungsflüssigkeit entgegen der Durchlaufrichtung der Tiere gerichtet ist.

11. Vorrichtung nach einem der vorhergehenden Ansprüche 5 bis 10, **dadurch gekennzeichnet, dass** ein erster Teil (27a) der Düsen (27) der Sprührichtung für Pflegemittel in Durchlaufrichtung der Tiere gerichtet ist und ein zweiter Teil (27b) der Düsen (27) der Sprührichtung für Pflegemittel entgegen der Durchlaufrichtung der Tiere gerichtet ist.

12. Vorrichtung nach einem der vorhergehenden Ansprüche 5 bis 11, **dadurch gekennzeichnet, dass** die Leitelemente (5) als Hohlkörper ausgebildet sind und zumindest die jeweils äusseren Seitenteile (3) lös- oder schwenkbar mit einem Tragrahmen (1) verbunden sind. Sodass der von den Leitelementen jeweils umschlossene Raum als Aufnahmebehältnis für die Funktionsteile, sowie für zu bevorratende Medien nutzbar ist.

## Claims

1. Method for cleaning an apparatus which serves for cleaning the hooves or claws of productive animals, said apparatus having a passage space (6) for the animals, which is formed by guide elements (5), and a trough (10) which is provided in the region of the passage space (6) and which is formed by wall elements (11, 12, 13, 14), wherein two wall elements (11, 12) extending parallel to the guide elements (5) may be formed integrally with the latter, having a grating (25) which is arranged at a distance from the trough base and which extends substantially horizontally, and having at least one nozzle (26) for spraying the hooves or claws with a cleaning liquid,
**characterized**
**in that** the trough (10) is closed off by means of a shut-off element (14 or 17) which is movable between a closed position and an open position, the liquid level in the trough (10) is raised preferably in a stepwise manner above the grating (25), wherein the upper edge of the wall elements (11, 12, 13, 14) is higher than the upper side of the grating (25), and the liquid situated in the trough (10) is drained by bringing the movable shut-off element (14 or 17) into the open position.

2. Method according to Claim 1, **characterized in that** the flap (17) is locked in the closed position by means of at least one two-armed lever (22), one arm (23) of which serves as a handle and the other arm (24) of which is brought into engagement with the flap (17).

3. Method according to either of the preceding claims, **characterized in that** the animals are sprayed by a first part (26a) of the nozzles (26) of the spray device for the cleaning liquid in the direction of passage of the animals, and the animals are sprayed by a second part (26b) of the nozzles (26) of the spray device for the cleaning liquid counter to the direction of passage of the animals.

4. Method according to one of the preceding claims, **characterized in that** the animals are sprayed by a first part (27a) of the nozzles (27) of the spray device for a care product in the direction of passage of the animals, and the animals are sprayed by a second part (27b) of the nozzles (27) of the spray device for a care product counter to the direction of passage of the animals.

5. Apparatus for cleaning the hooves or claws of productive animals, consisting of a passage space (6) for the animals, which is formed by guide elements (5), and a trough (10) which is provided in the region of the passage space (6) and which is formed by wall elements (11, 12, 13, 14), wherein two wall elements (11, 12) extending parallel to the guide elements (5) may be formed integrally with the latter, having a grating (25) which is arranged at a distance from the trough base and which extends substantially horizontally, and having at least one nozzle (26) for spraying the hooves or claws with a cleaning liquid, **characterized in that** the trough (10) has at least one outlet opening (28), which is able to be closed off by way of a shut-off element (14 or 17) which is movable between a closed position and an open position, **in that** the upper edge of the wall elements (11, 12, 13, 14) is higher than the upper side of the grating (25), and **in that** the liquid level in the trough (10) is able to be raised preferably in a stepwise manner above the grating (25) and the liquid situated in the trough (10) is able to be drained by bringing the movable shut-off element (14 or 17) into the open position.

6. Apparatus according to Claim 5, **characterized in that** the shut-off element is formed by at least one of the wall elements (14) extending transversely with respect to the guide elements (5), wherein this is partially or completely in the form of a flap (17) which is pivotable about a horizontal axis (19).

7. Apparatus according to Claim 6, **characterized in that** the pivot axis (19) of the flap (17) is arranged in the region of the upper narrow side (18) of the latter.

8. Apparatus according to Claim 6 or 7, **characterized in that** the flap (17) is able to be locked in the closed position by means of at least one two-armed lever (22), the arm (23) of which serves as a handle and the other arm (24) of which is able to be brought into engagement with the flap (17).

9. Apparatus according to one of the preceding Claims 5 to 8, **characterized in that** the height of the two wall elements (13, 14) is different, wherein the height of the wall element (13) arranged in the entry region of the passage space (6) is greater than the height of the wall element (14) arranged at the exit of the passage space (6).

10. Apparatus according to one of the preceding Claims 5 to 9, **characterized in that** a first part (26a) of the nozzles (26) of the spray device for the cleaning liquid is directed in the direction of passage of the animals, and a second part (26b) of the nozzles (26) of the spray device for the cleaning liquid is directed counter to the direction of passage of the animals.

11. Apparatus according to one of the preceding Claims 5 to 10, **characterized in that** a first part (27a) of the nozzles (27) of the spray device for a care product is directed in the direction of passage of the animals, and a second part (27b) of the nozzles (27) of the spray device for a care product is directed counter to the direction of passage of the animals.

12. Apparatus according to one of the preceding claims 5 to 11, **characterized in that** the guide elements (5) are in the form of hollow bodies, and at least the in each case external side parts (3) are connected to a support frame (1) in a detachable or pivotable manner, so that the space enclosed by each of the guide elements is able to be used as a receptacle for the function parts and for media to be stored.

## Revendications

1. Procédé permettant de nettoyer un dispositif servant au nettoyage des sabots ou des onglons d'animaux d'utilité, comprenant un espace de passage (6) pour les animaux qui est formé par des éléments de guidage (5) et une cuve (10) prévue dans la région de l'espace de passage (6), laquelle est formée par des éléments de paroi (11, 12, 13, 14), dans lequel deux éléments de paroi (11, 12) s'étendant parallèlement aux éléments de guidage (5) peuvent être formés d'un seul tenant avec ceux-ci, un caillebotis (25) disposé à distance du fond de cuve et s'étendant sensiblement horizontalement et au moins une buse (26) servant à pulvériser un liquide de nettoyage sur les sabots ou les onglons,
**caractérisé en ce que**
la cuve (10) est fermée au moyen d'un élément d'arrêt (14 ou 17) mobile entre une position de fermeture et une position d'ouverture, le niveau de liquide dans la cuve (10) est de préférence élevé progressivement au-dessus du caillebotis (25), le bord supérieur des éléments de paroi (11, 12, 13, 14) étant plus élevé que le côté supérieur du caillebotis (25), et le liquide se trouvant dans la cuve (10) étant évacué en amenant l'élément d'arrêt (14 ou 17) mobile à la position d'ouverture.

2. Procédé selon la revendication 1, **caractérisé en ce que** le volet (17) est bloqué dans la position de fermeture au moyen d'au moins un levier (22) à deux bras dont l'un des bras (23) sert de poignée et dont l'autre bras (24) est amené en prise avec le volet (17) .

3. Procédé selon l'une des revendications précédentes, **caractérisé en ce que** les animaux sont pulvérisés à l'aide d'une première partie (26a) des buses (26) du dispositif de pulvérisation de liquide de nettoyage dans le sens de passage des animaux, et les animaux sont pulvérisés à l'aide d'une deuxième partie (26b) des buses (26) du dispositif de pulvérisation de liquide de nettoyage en sens inverse au sens de passage des animaux.

4. Procédé selon l'une des revendications précédentes, **caractérisé en ce que** les animaux sont pulvérisés à l'aide d'une première partie (27a) des buses (27) du dispositif de pulvérisation de produit de soin dans le sens de passage des animaux, et les animaux sont pulvérisés à l'aide d'une deuxième partie (27b) des buses (27) du dispositif de pulvérisation de produit de soin en sens inverse au sens de passage des animaux.

5. Dispositif servant au nettoyage des sabots ou des onglons d'animaux d'utilité, constitué d'un espace de passage (6) pour les animaux qui est formé par des éléments de guidage (5) et d'une cuve (10) prévue dans la région de l'espace de passage (6), laquelle est formée par des éléments de paroi (11, 12, 13, 14), dans lequel deux éléments de paroi (11, 12) s'étendant parallèlement aux éléments de guidage (5) peuvent être formés d'un seul tenant avec ceux-ci, d'un caillebotis (25) disposé à distance du fond de cuve et s'étendant sensiblement horizontalement et d'au moins une buse (26) servant à pulvériser un liquide de nettoyage sur les sabots ou les onglons,
**caractérisé en ce que** la cuve (10) comprend au moins une ouverture de sortie (28) qui peut être fermée au moyen d'un élément d'arrêt (14 ou 17) mobile entre une position de fermeture et une position d'ouverture, **en ce que** le bord supérieur des éléments de paroi (11, 12, 13, 14) est plus élevé que le côté supérieur du caillebotis (25), et **en ce que** le niveau de liquide dans la cuve (10) peut être de préférence élevé progressivement au-dessus du caillebotis (25) et le liquide se trouvant dans la cuve (10) peut être évacué en amenant l'élément d'arrêt (14 ou 17) mobile à la position d'ouverture.

6. Dispositif selon la revendication 5, **caractérisé en ce que** l'élément d'arrêt est formé par au moins l'un des éléments de paroi (14) s'étendant transversalement aux éléments de guidage (5), cet élément d'arrêt étant configuré partiellement ou complètement sous la forme d'un volet (17) pivotant autour d'un axe horizontal (19).

7. Dispositif selon la revendication 6, **caractérisé en ce que** l'axe de pivotement (19) du volet (17) est disposé dans la région de son côté étroit supérieur (18).

8. Dispositif selon la revendication 6 ou 7, **caractérisé en ce que** le volet (17) peut être bloqué dans la position de fermeture au moyen d'au moins un levier (22) à deux bras dont l'un des bras (23) sert de poignée et dont l'autre bras (24) peut être amené en prise avec le volet (17).

9. Dispositif selon l'une des revendications précédentes 5 à 8, **caractérisé en ce que** la hauteur des deux éléments de paroi (13, 14) est différente, la hauteur de l'élément de paroi (13) disposé dans la région d'entrée de l'espace de passage (6) étant supérieure à la hauteur de l'élément de paroi (14) disposé à la sortie de l'espace de passage (6).

10. Dispositif selon l'une des revendications précédentes 5 à 9, **caractérisé en ce qu'**une première partie (26a) des buses (26) du dispositif de pulvérisation de liquide de nettoyage est orientée dans le sens de passage des animaux, et qu'une deuxième partie (26b) des buses (26) du dispositif de pulvérisation de liquide de nettoyage est orientée en sens inverse au sens de passage des animaux.

11. Dispositif selon l'une des revendications précédentes 5 à 10, **caractérisé en ce qu'**une première partie (27a) des buses (27) du dispositif de pulvérisation de produit de soin est orientée dans le sens de passage des animaux, et qu'une deuxième partie (27b) des buses (27) du dispositif de pulvérisation de produit de soin est orientée en sens inverse au sens de passage des animaux.

12. Dispositif selon l'une des revendications précédentes 5 à 11, **caractérisé en ce que** les éléments de guidage (5) sont réalisés sous forme de corps creux et au moins les parties latérales (3) respectivement extérieures sont reliées de manière amovible ou pivotante à un cadre de support (1) de telle sorte que l'espace entouré respectivement par les éléments de guidage puisse être utilisé comme contenant de réception pour les parties fonctionnelles ainsi que pour des fluides à stocker.
